Europäisches Patentamt

**European Patent Office**

**Office européen des brevets**

(11) Numéro de publication: **0 003 716**
**A1**

# (12) DEMANDE DE BREVET EUROPEEN

(21) Numéro de dépôt: **79810006.1**

(22) Date de dépôt: **25.01.79**

(51) Int. Cl.²: **C 08 F 10/00,** C 08 F 4/52, C 08 F 4/44

(30) Priorité: **26.01.78 CH 861/78**

(43) Date de publication de la demande: **22.08.79** Bulletin 79/17

(84) Etats contractants désignés: **BE CH DE FR GB IT NL**

(71) Demandeur: **BATTELLE MEMORIAL INSTITUTE, 7, route de Drize, CH-1227 Carouge/Genève (CH)**

(72) Inventeur: **Columberg, Alfred, 10, chemin Franck Thomas, CH-1208 Genève (CH)**

(74) Mandataire: **Dousse, Blasco et al, 7, route de Drize, CH-1227 Carouge/Genève (CH)**

(54) **Procédé de polymérisation d'oléfines, système catalytique utilisé et sa préparation.**

(57) Polymérisation des oléfines, notamment l'éthylène, au moyen d'un système catalytique comprenant un composé organique d'aluminium et une suspension ou solution d'un sel de magnésium dans un solvant organique non polaire, ce sel ayant été préalablement chauffé et deshydraté en présence d'acide et/ou d'anhydrid acétique puis mis en contact avec l'oléfine.

Ce système catalytique absolument dépourvu de métaux de transition garde son activité polymérisante sans discontinuer pendant une très longue période.

EP 0 003 716 A1

ACTORUM AG

0003716

TITRE MODIFIÉ
voir page de garde

PROCEDE POUR LA POLYMERISATION D'OLEFINES

EN PRESENCE DE CATALYSEUR

La présente invention concerne un procédé de polymérisation d'oléfines en présence d'un catalyseur dont l'activité se maintient sensiblement constante pendant sa durée
d'utilisation. Ce catalyseur, qui ne contient aucun métal
de transition, fonctionne, comme la plupart des catalyseurs
de polymérisation d'oléfines usuels, en présence d'un co-catalyseur (ou promoteur) désigné par C constitué par un dérivé organique de l'aluminium.

Le présent catalyseur désigné par A dans ce qui suit
se prépare d'une manière similaire à celles déjà décrites
dans les demandes de brevets de la Titulaire Nos 8050/75
et 2415/76. Suivant cette préparation, on chauffe un sel de
magnésium d'un acide organique carboxylique aliphatique,
avec l'acide et/ou l'anhydride d'acide acétique à 70-90°C
jusqu'à deshydratation complète (traitement dit de "modification"), on élimine ensuite les solvants acides volatils
par chauffage sous vide et on dissout ou disperse la majeure
partie du résidu solide dans un hydrocarbure inerte anhydre,
notamment le benzène, le toluène, l'hexane, le cyclohexane
et autres.

Cette solution ou dispersion constitue le catalyseur
(A) connu dont il est question, entre autres, dans la demande de brevet No 8050/75 qu'on utilise, en compagnie du

- 2 -

0003716

co-catalyseur (C) susmentionné pour la polymérisation d'oléfines, notamment l'éthylène ou le propylène.

Ainsi, toujours suivant l'art antérieur précité, on
place dans un autoclave convenablement séché une quantité
appropriée de la solution de catalyseur A qu'on étend avec
une portion de solvant inerte anhydre, on ajoute le co-catalyseur C et on introduit, sous pression et à une température généralement inférieure à 100°C, l'oléfine à polymériser,
par exemple de l'éthylène convenablement séché et purifié.
La polymérisation débute presque aussitôt et se poursuit un
certain nombre d'heures (la pression d'éthylène étant maintenue constante), puis sa vitesse décroît et elle finit par
s'arrêter complètement, le système catalytique ayant perdu
son efficacité. On notera que ce comportement des catalyseurs de polymérisation d'oléfines est extrêmement général,
que ceux-ci soient ou non à base d'éléments de transition
(catalyseurs Ziegler), et que la Titulaire n'a pas connaissance jusqu'à présent que de tels catalyseurs existent dont
l'activité se maintient constante, ou même augmente, au
cours de la polymérisation.

Or, et c'est justement sur une découverte de ce genre,
très surprenante en soi, qu'est basée la présente invention.
La Titulaire a en effet découvert qu'en modifiant le procédé de polymérisation susmentionné, le catalyseur conservait
son activité pendant une période très prolongée dont l'étendue n'a pu encore être déterminée exactement comme on le
verra plus loin. Plus encore, suivant ce procédé, l'activité du catalyseur a tendance à augmenter avec le temps de
polymérisation.

Le procédé suivant l'invention est caractérisé par le
fait qu'on ajoute, à température ambiante et sous pression,
une portion de l'oléfine à polymériser à la solution du
catalyseur A, qu'on laisse ce mélange sous pression plusieurs
heures au repos ou sous légère agitation, qu'on élève et maintient la température entre 30 et 110°C environ et qu'on ajoute ensuite une portion du co-catalyseur C. Sous pression de l'oléfine, la polymérisation débute alors aussitôt et se poursuit sans discontinuer à une vitesse constante ou même supérieure, pour autant qu'on recharge périodiquement le milieu réactionnel en ingrédients A et C au fur et à mesure de leur entraînement, par voie mécanique, dans le polymère formé.

A ce jour on n'a pas pu mesurer avec précision la durée de vie effective d'un tel système catalyseur car, après une longue période de polymérisation, le récipient opératoire se remplit entièrement de polymère lequel absorbe pratiquement entièrement le liquide réactionnel, solvant et catalyseur compris. Pour remédier à cet inconvénient, on peut séparer à intervalles relativement rapprochés le solide formé du liquide réactionnel et recharger celui-ci en solvant et catalyseur (ingrédients A et C) de manière que se maintiennent approximativement égales leurs concentrations initiales; on n'observe alors aucune diminution de l'activité catalysante. Bien au contraire celle-ci a tendance à augmenter, comme on le verra dans la partie spéciale de la description, ce qui se traduit par une hausse spontanée de la température.

Pour l'instant, on ne connaît pas les raisons du comportement surprenant de ce catalyseur. On suppose cependant que, pendant la période préliminaire durant laquelle l'ingrédient A est seul en contact avec l'oléfine, il peut se former une sorte de prépolymère soluble s'associant d'une manière indéterminée avec le catalyseur A et donnant une composition dont l'action catalysante résiste à l'inhibition progressive qui affecte les catalyseurs habituels. Cette théorie est cependant entièrement spéculative. Quoiqu'il en soit exactement, cette propriété est particulièrement avantageuse car, suivant le procédé de l'invention, on peut obtenir une quantité considérable de polyoléfine en

n'utilisant qu'une très faible quantité de catalyseur. Le degré de contamination du polymère par des impuretés minérales (catalyseur entraîné) pourra être ainsi maintenu à une valeur minimum. En outre, le présent procédé s'appliquant naturellement à la polymérisation en continu, il est très apprécié industriellement car il permet d'obtenir des produits dont les propriétés sont bien reproductibles et constantes.

Comme sels organiques de magnésium, on utilisera de préférence, pour la préparation du catalyseur $\underline{A}$, des sels d'acides organiques linéaires, notamment les formiate, acétate, propionate, oxalate, maléate, lactate, succinate, tartrate, citrate, benzoate, phénylacétate, adipate, sébacate, phtalate, acrylate, oléate, acétylacétonate, stéarate, etc ...

Comme co-catalyseur $\underline{C}$, on peut utiliser un dérivé organique de l'aluminium de formule $Al_n R_y X_{3n-y}$ où R est un alcoyle, X est un halogène, n vaut 1 ou 2 et y est un entier ne dépassant pas 3 avec n = 1 et égal à 1,3 ou 5 avec n = 2. De préférence, on utilise $AlClEt_2$ (où Et désigne un reste éthyle) ou $Al_2Et_3Cl_3$.

Suivant un mode d'exécution préféré du présente procédé, on commence par préparer le catalyseur $\underline{A}$ en chauffant 10-15 heures vers 70-80°C sous protection d'azote sec un sel de magnésium, par exemple l'acétate de magnésium, dans un mélange environ 1 : 1 d'acide et anhydride acétique. De préférence, on utilisera pour cette opération, un appareil à ballon rotatif tel que le "Rotavapor" de la Société Büchi à Flawil, ce qui permet d'obtenir une dispersion ou dissolution progressive du sel de magnésium dans le mélange acide. Puis, on abaisse la pression dans le ballon et distille le mélange acide-anhydride, après quoi on pousse le vide vers 2-10 Torr tout en élevant quelque peu la température (par exemple jusqu'à 110-120°C) de manière à éliminer les produits volatils aussi bien que possible. Si nécessaire, on pourra, à ce stade, laisser refroidir, ajouter un solvant inerte parfaitement sec comme le benzène ou l'hexane, chauffer à nouveau pour distiller ce solvant de manière que les vapeurs de celui-ci entraînent encore quelques traces de substances volatiles et terminer le séchage en continuant à chauffer en présence d'un absorbant comme le $P_2O_5$.

Puis, après refroidissement, et toujours sous azote et dans des conditions parfaitement anhydres, on ajoute un solvant sec au résidu solide, par exemple du benzène, de l'heptane ou du méthylcyclohexane dans lequel celui-ci se dissout ou se disperse extrêmement finement constituant ainsi la phase de catalyseur A.

On ajoute dans un autoclave parfaitement sec et purgé à l'azote une portion de cette suspension colloïdale de catalyseur et on introduit une portion de l'oléfine à polymériser, par exemple de l'éthylène, sous une pression supérieure à la pression ordinaire, par exemple 10 à 20 atmosphères. On laisse alors le tout 10 à 12 heures au repos sous pression ou sous lente agitation. Après cette période, on ne constate aucune formation visible de polymère. On chauffe vers 70-80°C et relache la pression le temps nécessaire à l'introduction d'une portion du co-catalyseur C, de préférence du chlorure de diéthylaluminium. Dès le rétablissement de la pression, on observe le départ de la polymérisation par formation d'un solide dont la masse augmente peu à peu. Après quelques heures, on ajoute encore une portion de co-catalyseur et la polymérisation se poursuit à un rythme accéléré. Après environ 48 heures, la polymérisation semble encore s'accélérer, la température s'élève spontanément de plusieurs degrés même en l'absence d'agitation.

La quantité de catalyseur A à utiliser dépend, bien entendu, de la capacité de l'autoclave mais elle n'est pas critique. Ainsi, dans le cas d'un autoclave de 1 litre en pyrex on travaillera, de préférence, dans 500 ml de solvant contenant environ 10 mmole de catalyseur A par litre ($\sim$ 240 mg/l de Mg). Cependant, des concentrations aussi basses que 1 mmole/l sont encore efficaces quoiqu'alors la polymérisation soit plus lente.

De préférence, le rapport molaire entre le co-catalyseur C et le catalyseur A sera compris entre 6 : 1 et 1 : 1. Cependant ces valeurs peuvent être outrepassées dans certains cas spéciaux.

Pour permettre à la polymérisation de se poursuivre en continu pendant un temps prolongé, il faut de préférence, régulièrement séparer le solide formé du milieu de réaction. Pour cela, on peut utiliser les dispositifs connus prévus à cet effet. Au laboratoire, par exemple, on siphonnera de temps à autre le liquide réactionnel du récipient laboratoire au moyen d'une pipe frittée de porosité assez grossière de manière à le séparer du polymère solide et on l'introduira dans un réacteur identique disposé en parallèle. On complètera le niveau du liquide au moyen d'une quantité convenable de solvant additionné des catalyseurs A et C, on laissera la polymérisation se poursuivre et on répétera le transvasement après une période donnée.

Dans l'industrie, on pourra utiliser des autoclaves munis de séparateurs de solides (in situ) par exemple de plateaux filtrants mobiles ou de rampes hélicoïdales permettant de séparer le solide formé à intervalles rapprochés ou en continu sans devoir interrompre l'arrivée de l'oléfine et, partant, la marche de la polymérisation.

Les exemples suivants illustrent l'invention de manière détaillée.

<u>Exemple 1</u>

a) Préparation du catalyseur A

Dans un ballon séché 24 heures au four on place 6,42 g (30 mmoles) d'acétate de magnésium pulvérisé puriss et ne contenant aucune trace de métaux de transitions décelable par les analyses les plus poussées. Puis on ajoute 120 ml d'acide acétique et 110 ml d'anhydride acétique, tous deux de qualité puriss et fraîchement distillés sous azote dans des distillateurs en verre d'une propreté absolue. On relie le ballon à un appareil évaporateur rotatif "Rotavapor" de la firme Büchi à Flawil et on purge le tout 3 fois à température ambiante au moyen d'azote pur et sec. Puis on met l'appareil en rotation (60 r.p.m.) et, toujours sous azote, on chauffe le ballon 20 heures à 80-90°C au bain de polyéthylène glycol. Pendant cette période de chauffe, on n'observe aucun changement visible du solide si ce n'est sa dissolution progressive.

On relie le tube de sortie de l'évaporateur à un réfrigérant descendant et, par réduction progressive de la pression interne, on élimine le liquide par distillation. On abaisse la pression jusqu'à 1 Torr et chauffe 24 heures à 110°C après avoir relié le tube de sortie à un récipient contenant du $P_2O_5$ et tout en maintenant une lente admission d'azote. Au cours de ce séchage, il est nécessaire de changer à plusieurs reprises le $P_2O_5$ absorbant car la surface de celui-ci s'altère rapidement au contact des vapeurs à éliminer.

On laisse refroidir et ajoute 200 ml de benzène fraîchement distillé sur sodium et conservé sur tamis moléculaires. On agite pendant 10 min puis on distille le benzène, rétablit le vide de 1 Torr et chauffe encore 24 heures à 120°C dans les conditions sus-indiquées après quoi on laisse refroidir et on reprend le solide pulvérulent par le benzène sec dans lequel il se dissout ou se disperse très finement sous forme d'un liquide laiteux. On décante ainsi plusieurs portions de benzène contenant du solide en suspension très fine, on réunit ces portions dans un récipient sec purgé à l'azote pur et complète à 500 ml avec du benzène sec. Cette solution constitue la solution stock du catalyseur A et contient approximativement 350 mg de magnésium, c'est-à-dire environ 50 % de l'acétate de départ. A l'abri
de l'humidité cette solution se conserve pendant plusieurs
mois sans rien perdre de ses propriétés.

b) Polymérisation

Dans un autoclave en verre de 1 litre rincé à l'azote
pur et sec, on place 150 ml (environ 5 mmoles) de la solution benzénique du catalyseur A tel que préparé selon la
description ci-dessus puis on ajoute encore 350 ml de benzène sec. On relie l'autoclave à un cylindre d'éthylène par
l'intermédiaire d'un purificateur à tamis moléculaires et,
à température ordinaire, on introduit de l'éthylène sous
10 atmosphères. On met en marche, lentement, l'agitateur de
l'autoclave et laisse ainsi reposer le tout pendant la nuit.
Puis on chauffe à 70°C et, sous protection d'éthylène, on
ajoute 20 mmoles (2,4 g) de chlorure de diéthylaluminium
(DEAC). On établit à 10 atmosphères la pression d'éthylène
et, sous agitation, on observe la formation de polyéthylène
sous forme de solide qui marque le début de la polymérisation. Celle-ci se poursuit dans les mêmes conditions pendant
20 heures après quoi on ajoute, comme ci-dessus, encore 20
mmoles de chlorure de diéthylaluminium. On poursuit la polymérisation toujours dans les mêmes conditions pendant 48
heures après quoi on arrête l'agitateur et relache la pression à 0 atmosphère. En rétablissant ultérieurement cette
pression, on s'aperçoit que la polymérisation repart de plus
belle et que la température monte spontanément à 76°C. Cependant, comme l'autoclave est alors entièrement rempli de
polymère, on siphonne le liquide réactionnel et, à l'abri
de l'air, l'introduit dans un second réacteur identique au
premier. Puis, toujours dans les mêmes conditions, et sans
même compenser les pertes en catalyseurs subies par entraînement mécanique lors des opérations de séparation et de
transvasement, on poursuit la polymérisation jusqu'à l'échéance totale de 11 jours, temps au bout duquel on a isolé
367 g de polyéthylène, pesé après séchage à 100°C sous 10 Torr. Ce résultat correspond à une activité de 13,9 g PE/h.g Mg et à une productivité de 627 g PE/g catalyseur.

Le polyéthylène obtenu était de haute qualité ainsi qu'on peut le déduire des constantes suivantes :

| | | |
|---|---|---|
| Indice de plasticité (200°C) | 0,046 | N/mm$^2$ |
| Coefficient de viscosité (réduite) | 11,6 | g/dl |
| Densité | 0,931 | g/cm$^3$ |
| Densité de la poudre | 210 | g/l |
| Module d'élasticité ($\delta_{13}$) | 13,9 | N/mm$^2$ |
| Résistance de rupture ($\delta_R$) | 39,1 | N/mm$^2$ |
| Allongement maximum | 550 | % |
| Spectre IR | Absence de groupes CH$_3$ | |

Exemple 2

On a procédé exactement comme décrit ci-dessus mais en utilisant de l'heptane comme milieu de polymérisation. Dans cet essai, on a interrompu la polymérisation après 6 jours après avoir obtenu 68 g de polyéthylène ce qui correspond à une activité de 4,8 et à une productivité de 111 g PE/g catalyseur.

Exemple 3

On a procédé exactement comme décrit dans l'exemple 1, mais en utilisant le méthylcyclohexane sec et pur comme hydrocarbure de dispersion du catalyseur et comme milieu de polymérisation, en lieu et place du benzène. Après 30 heures de polymérisation, on a constaté une augmentation spontanée de la température à 110°C; cette température s'est maintenue d'elle-même ensuite. On a arrêté la réaction après 50 heures, temps au bout duquel on a mesuré une activité de 138,3 et un indice de productivité de 1195 g PE/g catalyseur.

Exemple 4

a) Préparation du catalyseur

Dans un ballon de pyrex parfaitement sec de 500 ml, on a placé 12,5 mmole de stéarate de magnésium (($C_{17}H_{33}COO$)$_2$Mg) pulvérisé et 100 ml d'acide acétique puriss. On a alors chauffé à 70-75$^O$C et maintenu le ballon 20 heures à cette température dans les mêmes conditions que celles décrites à l'exemple 1. La solution, pendant cette période, est transparente et légèrement jaune. Puis on a réduit la pression à 50 Torr et on a éliminé le solvant par distillation à 40-75$^O$C. On obtient ainsi un résidu huileux solide jaune qu'on sèche ensuite 10 heures à 75$^O$C sous 5 Torr.

On a repris le résidu sec par 100-200 ml d'heptane sec, on a agité une dizaine de minutes et on a éliminé l'heptane par distillation sous vide. On a répété cette opétion deux à trois fois puis on a dissous le résidu sec dans 500 ml de benzène sec.

b) Polymérisation de l'éthylène

Dans un autoclave en pyrex préalablement chauffé 20 heures à 95$^O$C (5 Torr) sous courant d'éthylène purifié, on a introduit 300 ml de benzène sec et 150 ml de la solution du catalyseur préparée comme décrit ci-dessus et contenant 300 mg de magnésium (mesuré en poids de métal). A température ambiante, on a établi une pression d'éthylène de 8 kg/cm$^2$ et on a laissé ainsi 12 heures au repos. Finalement, à 30$^O$C et sous courant d'éthylène, on a ajouté 50 mmole de chlorure de diéthylaluminium (DEAC). On a laissé la polymérisation s'effectuer 48 heures à 70$^O$C sous 10 kg/cm$^2$ d'éthylène après quoi, sous courant d'éthylène, on a séparé le polymère formé de la solution et on a introduit une portion de 200 ml de celle-ci (laquelle contenait 30 mg de Mg) dans un second autoclave identique au premier et, à 70$^O$C, on a continué la polymérisation sous 5-10 kg/cm$^2$ d'éthylène. Après 14 jours (350 heures) on a interrompu la polymérisation et récolté 53,5 g de polyéthylène (PE) pesé après filtration et séchage une nuit à 100$^O$C sous 10 Torr. Activité : environ 5 g PE/h.g Mg; productivité 73,5 g PE/g catalyseur.

Essai comparatif

Dans le but de démontrer l'importance de l'étape du présent procédé laquelle consiste à mettre en contact l'oléfine avec le catalyseur A en l'absence du catalyseur C, on a effectué l'essai suivant dans lequel, suivant les méthodes traditionnelles de polymérisation des oléfines, on met en contact le catalyseur et le co-catalyseur avant d'introduire celle-ci :

Dans le même autoclave que celui décrit à l'exemple 1 et dans les mêmes conditions opératoires, on a introduit 5 mmole du catalyseur A en solution benzénique tel que décrit à l'exemple 1. Puis on a ajouté 20 mmoles de $AlEt_2Cl$ et on a laissé quelque temps le tout au repos sous azote à température ambiante.

On a chauffé à $70^\circ C$ et introduit de l'éthylène, d'abord pour chasser l'azote, ensuite, sous pression de 10 atmosphères pour que la polymérisation puisse se mettre en marche. On a effectivement observé, comme dans les essais décrits plus haut, la formation de polyéthylène, d'abord assez rapide mais se ralentissant au bout d'une heure environ et devenant si faible qu'il devenait pratiquement inutile de persévérer. On a alors interrompu la réaction laquelle a fourni 4,5 g de polyéthylène ce qui correspond à une activité de 45 g PE/g Mg. On voit, par cet essai, que l'application du procédé classique de polymérisation au présent catalyseur A sans métaux de transition conduit à une activité initiale approximativement 3 fois plus grande que celle du même catalyseur utilisé selon l'exemple 1, mais que cette activité décroît rapidement et que, en conséquence, la productivité est très faible.

Exemples 5 à 18

On répète les essais de polymérisation décrits aux exemples 1 et 4 ci-dessus au moyen des mêmes catalyseurs A (acétate = exemple 1; stéarate = exemple 4) mais en faisant varier les paramètres opératoires comme indiqué au tableau qui suit. Dans tous les cas, on a, avant de commencer la polymérisation proprement dite, laissé au repos le catalyseur A à base de Mg pendant une nuit à température ordinaire sous 10 bar d'éthylène. Le tableau qui suit donne également les résultats obtenus et montre qu'il est avantageux de travailler dans des solutions relativement très diluées en catalyseur et à des températures du haut de la gamme. Les activités sont en g de polymère/g de Mg·h et les productivités en g de polymère/g de Mg.

| Exemple | Sel de Mg | Catalyseur A (en mg de Mg) | DEAC (Mmoles) | Solvant (ml) | Ethylène (press.bar) | Temp. (°C) | Polym. (durée,h.) | Solide PE obtenu (g) | Activité | Productivité |
|---|---|---|---|---|---|---|---|---|---|---|
| 5 | acétate | 100 | 15 | Bz[(1)],200 | 10 | 70 | 360 | 370 | 10,3 | – |
| 6 | " | 100 | 38 | Hept[(2)],200 | 10 | 70 | 140 | 70 | 5 | – |
| 7 | " | 50 | 15 | Bz, 400 | 10 | 70 | 190 | 20 | 2,1 | – |
| 8 | " | 100 | 8 | Bz, 200 | 10 | 20 | 145 | 26 | 1,8 | – |
| 9 | " | 100 | 40 | Bz, 100 | 10 | 70 | 70 | 45 | 4,5 | – |
| 10 | " | 70 | 15 | Bz, 200 | 10 | 70 | 240 | 48,5 | 3 | – |
| 11 | " | 45 | 15 | – | 10 | 90 | 14 | 220 | 350 | – |
| * 12 | stéarate | 300 | 10 | Bz, 450 | 10 | 70 | 150 | 36 | 0,8 | – |
| 13 | acétate | 120 | 15 | Hept, – | 10 | 70 | 85 | 140 | 14,1 | 1166 |
| 14 | " | 60 | 30 | Hept, 400 | 10 | 110 | 50 | 415 | 138 | 6916 |
| 15 | " | 10 | 8 | Hept, 400 | 10 | 75 | 70 | 292 | 417 | 29200 |
| 16 | " | 5 | 8 | Hept, 200 | 10 | 80 | 360 | 310 | 172 | 62000 |
| 17 | " | 10 | 8 | MCH[(3)], 300 | 10 | 70-90 | 290 | 370 | 127 | 37000 |
| 18 | " | 10 | 15 | MCH, 900 | 10 | 80 | 490 | 1078 | 110 | 5400 |

(1) Bz = benzène    (2) Hept = heptane    (3) MCH = méthylcyclohexane

* Après filtration du polyéthylène obtenu après 150 heures, le filtrat (contenant $\sim$ 30 mg de Mg) a été repris, dilué par 200 ml de Bz, rechargé de 30 mmole de DEAC et remis en opération sous 10 bar d'éthylène à 70°. Après encore 200 heures de fonctionnement, on a isolé une nouvelle quantité de polyéthylène (54 g).

0003716

REVENDICATIONS

1. Procédé de polymérisation d'oléfines au moyen d'un catalyseur A sans métaux de transitions, fonctionnant en présence comme co-catalyseur C d'un composé organique d'aluminium, et dont l'activité se maintient sensiblement constante en cours de la durée de son utilisation, qu'on prépare en chauffant à 70-90°C un sel de magnésium d'un acide carboxylique aliphatique organique avec l'acide et/ou l'anhydride acétique jusqu'à deshydratation complète, en éliminant ensuite les solvants acides volatils par chauffage sous vide et en dissolvant ou dispersant ensuite la majeure partie du résidu dans un hydrocarbure liquide inerte anhydre, caractérisé par le fait qu'on ajoute, à température ambiante et sous pression, une portion de l'oléfine à polymériser à la solution du catalyseur A, qu'on abandonne ce mélange sous pression plusieurs heures au repos ou sous légère agitation, qu'on élève et maintient la température entre 30 et 110°C et qu'on ajoute ensuite une portion du co-catalyseur C ce qui, après rétablissement de la pression d'oléfine, enclenche la polymérisation laquelle se poursuit sans ralentir pendant une très longue période.

2. Procédé suivant la revendication 1, caractérisé par le fait que le sel de départ pour la préparation du catalyseur A est un acétate de magnésium qu'on chauffe en présence d'un mélange d'acide et d'anhydride acétique, qu'on disperse le résidu solide résultant de l'évaporation de ces solvants dans du benzène, qu'on met cette dispersion 12 heures en contact avec de l'éthylène sous 10 atmosphères qu'on chauffe ensuite à 80°, qu'on introduit du chlorure de diéthylaluminium comme co-catalyseur et qu'on laisse la polymérisation de l'éthylène sous pression de 10 atmosphères se poursuivre au moins 48 heures.

3. Procédé suivant la revendication 1, caractérisé par le fait que le sel de départ est choisi parmi le stéarate

- 15 -

0003716

le benzoate, le phénylacétate, l'adipate, le sébacate, le phtalate, l'acrylate, l'oléate et l'acétate de magnésium.

4. Procédé suivant les revendications 1 et 2, caractérisé par le fait que, durant la polymérisation, on sépare, à intervalles, le polymère formé du milieu réactionnel.

5. Procédé suivant la revendication 4, caractérisé par le fait qu'on recharge, à intervalles, le milieu réactionnel en solvant, catalyseur et co-catalyseur pour compenser les pertes subies par entraînement lors des séparations périodiques du polymère formé.

6. Procédé de préparation d'un système catalytique pour la polymérisation d'oléfines comprenant un co-catalyseur $\underline{C}$ constitué par un composé organique d'aluminium et un catalyseur principal $\underline{A}$ qu'on prépare en chauffant à 70-90$^{\circ}$C un sel de magnésium d'un acide organique aliphatique avec un acide et/ou un anhydride organique inférieur jusqu'à deshydratation complète, en éliminant ensuite les solvants acides volatils par chauffage sous vide et en dissolvant ou dispersant ensuite la majeure partie du résidu dans un hydrocarbure liquide inerte anhydre, caractérisé par le fait qu'avant emploi, c'est-à-dire avant de mettre le composant $\underline{A}$ en présence simultanée du co-catalyseur et de l'oléfine à polymériser, on l'active en le mettant plusieurs heures en contact, sous pression et à température ambiante, avec celle-ci, le tout de manière que le système catalytique ainsi obtenu conserve son efficacité pendant une très longue période atteignant notamment au moins 10 jours.

7. Système catalytique obtenu suivant le procédé de la revendication 6.

| | **DOCUMENTS CONSIDERES COMME PERTINENTS** | | **CLASSEMENT DE LA DEMANDE (Int. Cl.²)** |
|---|---|---|---|
| Catégorie | Citation du document avec indication, en cas de besoin, des parties pertinentes | Revendication concernée | |
| A | <u>FR - A - 316 248</u> (BATTELLE)<br><br>\* Revendications 1-9 \* | 1 | C 08 F 10/00<br>4/52<br>4/44 |
| D | & CH - A - 597 261<br>& CH - A - 602 261<br><br>-- | | |
| A | <u>FR - A - 1 178 041</u> (GOODRICH-GULF)<br>\* Résumé a-d \*<br><br>-- | 1 | |
| A | <u>FR - A - 2 022 414</u> (ESSO)<br>\* Revendications 1-10 \*<br><br>---- | 1 | **DOMAINES TECHNIQUES RECHERCHES (Int. Cl.²)**<br><br>C 08 F 10/00 -<br>10/14<br>C 08 F 110/00 -<br>110/14<br>C 08 F 210/00 -<br>210/18 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 27-04-1979 | WEBER |

OEB Form 1503.1   06.78